# EUROPEAN PATENT APPLICATION

(11) **EP 3 892 654 A1**
(43) Date of publication of application: **13.10.2021**
(21) Application number: 20749150.7
(22) Date of filing: 24.01.2020
(51) Int. Cl.: C08F 220/00, C09K 3/00, C08J 9/06, C08J 9/20, C08J 9/32

(54) **THERMALLY EXPANDABLE MICROCAPSULES AND FOAM MOLDING COMPOSITION**

(30) Priority: 01.02.2019 JP 2019017203
(71) Applicant: Sekisui Chemical Co., Ltd., Osaka-shi, Osaka 530-0047 (JP); Tokuyama Sekisui Co., Ltd., Osaka-shi, Osaka 530-0047 (JP)
(72) Inventor: KAWAGUCHI, Yasuhiro, Shunan-shi, Yamaguchi 746-0006 (JP); KAWAKAMI, Takeru, Shunan-shi, Yamaguchi 746-0006 (JP); SATOU, Shun, Shunan-shi, Yamaguchi 746-0006 (JP)
(74) Representative: Cabinet Beau de Loménie
(86) International application number: PCT/JP2020/002563
(87) International publication number: WO 2020/158613

(57) **Abstract**

The present invention provides a thermally expandable microcapsule having excellent heat resistance and high expansion ratio and enabling production of a light, high-hardness molded article having excellent physical properties (abrasion resistance), and a composition for foam molding containing the thermally expandable microcapsule. Provided is a thermally expandable microcapsule including: a shell containing a polymer; and a volatile expansion agent as a core agent encapsulated by the shell, the shell containing silicon dioxide and a polymer obtained by polymerizing a monomer composition containing a carbonyl group-containing monomer, the thermally expandable microcapsule having a ratio of a peak intensity based on a C=O bond in the shell to a peak intensity based on the silicon dioxide in the shell (peak intensity based on C=O bond/peak intensity based on silicon dioxide) of 0.25 to 1.0 as determined by IR spectral analysis, the thermally expandable microcapsule having a maximum foaming temperature (Tmax) of 180°C to 225°C.

## Description

### TECHNICAL FIELD

The present invention relates to a thermally expandable microcapsule and a composition for foam molding containing the thermally expandable microcapsule.

### BACKGROUND ART

To reduce the weight and increase the functionality of resin materials, resin materials have been foamed using foaming agents. Typical foaming agents include thermally expandable microcapsules and chemical foaming agents.

A widely known thermally expandable microcapsule includes a thermoplastic shell polymer filled with a volatile expansion agent which turns into gas at a temperature not higher than the softening point of the shell polymer. For example, Patent Literature 1 discloses a method for producing a thermally expandable microcapsule filled with a volatile expansion agent, the method including: preparing an oily mixture liquid by mixing a monomer with a volatile expansion agent such as a low boiling point aliphatic hydrocarbon; and adding the oily mixture liquid and an oil-soluble polymerization catalyst to an aqueous dispersion medium containing a dispersant with stirring to perform suspension polymerization.

### CITATION LIST

### - Patent Literature

Patent Literature 1: JP S42-26524 B

### SUMMARY OF INVENTION

### - Technical problem

However, thermally expandable microcapsules obtained by the above method may have poor storage stability because the encapsulated volatile expansion agent, which is a liquid component, may escape from the microcapsules depending on how the microcapsules are stored. Such poor storage stability may result in low expansion ratio.

Chemical foaming agents allow molded articles to have high expansion ratio because chemical foaming agents generate a large amount of gas at their decomposition temperature. However, chemical foaming agents may cause poor appearance due to the gas, or may form open cells and reduce the hardness of molded articles more than necessary. In contrast, thermally expandable microcapsules do not impair the appearance of molded articles, but have limited expansion ratio.

To counter the situation, thermally expandable microcapsules and chemical foaming agents have been used in combination to provide foaming agents combining the advantages of both of them. However, as noted above, chemical foaming agents used in combination with thermally expandable microcapsules may cause open cells, voids, or outgassing due to escape of generated gas from the system. As a result, the resulting foam molded article may have low strength.

The present invention aims to provide a thermally expandable microcapsule having excellent heat resistance and high expansion ratio and enabling production of a light, high-hardness molded article excellent in physical properties such as abrasion resistance, and a composition for foam molding containing the thermally expandable microcapsule.

### - Solution to problem

The present invention relate to a thermally expandable microcapsule including: a shell containing a polymer; and a volatile expansion agent as a core agent encapsulated by the shell, the shell containing silicon dioxide and a polymer obtained by polymerizing a monomer composition containing a carbonyl group-containing monomer, the thermally expandable microcapsule having a ratio of a peak intensity based on a C=O bond in the shell to a peak intensity based on the silicon dioxide in the shell (peak intensity based on C=O bond/peak intensity based on silicon dioxide) of 0.25 to 1.0 as determined by IR spectral analysis, the thermally expandable microcapsule having a maximum foaming temperature (Tmax) of 180°C to 225°C.

The present invention is described in detail below.

As a result of intensive studies, the present inventors have found out that the performance of the resulting molded article is greatly related to the silicon oxide contained in the thermally expandable microcapsule.

Moreover, the inventors have found out that a thermally expandable microcapsule in which C=O bonds and silicon dioxide in the shell have a predetermined relation can have excellent heat resistance and high expansion ratio, and enables production of a light, high-hardness molded article having excellent physical properties (abrasion resistance). The inventors thus have completed the present invention.

Moreover, an aggregate of a large number of thermally expandable microcapsules of the present invention has excellent fluidity, and thus the thermally expandable microcapsule of the present invention can be stably fed through a hopper or the like during molding.

The thermally expandable microcapsule of the present invention has a ratio of a peak intensity based on a C=O bond in the shell to a peak intensity based on the silicon dioxide in the shell (peak intensity based on C=O bond/peak intensity based on silicon dioxide) of 0.25 to 1.0 as determined by IR spectral analysis. This enables production of a light, high-hardness molded article having excellent physical properties (abrasion resistance).

In addition, when used in combination with a chemical foaming agent, the thermally expandable microcapsule of the present invention can also serve as a nucleating agent and can be a starting point for the cell formation by decomposition of the chemical foaming agent. The lower limit of the peak ratio is preferably 0.4, more preferably 0.5, still more preferably 0.6, further preferably 0.7, and the upper limit thereof is preferably 0.95, more preferably 0.9, still more preferably 0.85, further preferably 0.8.

The IR spectral analysis is measurement of an absorption spectrum by infrared absorption spectrometry. The spectrum may be measured by an IR measurement device, for example.

The peak based on a C=O bond appears around 1,700 to 1,730 cm⁻¹. The peak based on silicon dioxide appears around 1,100 to 1,120 cm⁻¹.

The lower limit of the maximum foaming temperature (Tmax) of the thermally expandable microcapsule of the present invention is 180°C and the upper limit thereof is 225°C. The thermally expandable microcapsule having a maximum foaming temperature within the above range can have high heat resistance, so that breaking and shrinking of the thermally expandable microcapsule can be prevented when a composition containing the thermally expandable microcapsule is molded in a high-temperature range. In addition, such thermally expandable microcapsules are less likely to aggregate during molding, thus leading to good appearance. The lower limit is more preferably 185°C, still more preferably 190°C and the upper limit is more preferably 222°C, still more preferably 220°C.

The maximum foaming temperature as used herein means a temperature at which the thermally expandable microcapsule reaches its maximum diameter (maximum displacement) when the diameter is measured while the microcapsule is heated from room temperature.

The upper limit of the foaming starting temperature (Ts) is preferably 170°C. A foaming starting temperature of 170°C or lower allows easy foaming, making it possible to achieve a desired expansion ratio. The lower limit is preferably 145°C, and the upper limit is more preferably 165°C.

The lower limit of the maximum displacement (Dmax) of the thermally expandable microcapsule of the present invention as measured by thermomechanical analysis is preferably 350 µm, and the upper limit thereof is preferably 1,000 µm. When the maximum displacement (Dmax) is within the above range, the expansion ratio can be improved, and desired foaming performance can be obtained. The maximum displacement means a value of displacement at which a predetermined amount of thermally expandable microcapsules as a whole reaches their maximum diameter when the diameters of the predetermined amount of thermally expandable microcapsules are measured while the microcapsules are heated from room temperature.

The lower limit of the average particle size (volume average particle size) of the thermally expandable microcapsule of the present invention is preferably 10 µm and the upper limit thereof is preferably 35 µm. The thermally expandable microcapsule having an average particle size within the above range enables the resulting molded article to have appropriate cells, a sufficient expansion ratio, and excellent appearance. The lower limit is more preferably 15 µm, still more preferably 20 µm, and the upper limit is more preferably 30 µm, still more preferably 25 µm.

The thermally expandable microcapsule of the present invention preferably has a CV value of the volume average particle size of 35% or lower. The CV value is usually 10% or higher, preferably 15% or higher.

The shell constituting the thermally expandable microcapsule of the present invention contains silicon dioxide and a polymer obtained by polymerizing a monomer composition containing a radically polymerizable unsaturated carboxylic acid monomer.

The shell contains silicon dioxide.

The silicon dioxide may be attached to a surface of the shell or may be mixed in the shell. Here, the silicon dioxide includes silicon dioxide hydrate.

Examples of the silicon dioxide include silicon dioxide contained in silica fine particles or silicon dioxide contained in colloidal silica.

The colloidal silica is colloid of silicon dioxide or silicon dioxide hydrate.

The colloidal silica containing silicon dioxide preferably has an average particle size of 10 to 300 nm.

The shell contains silicon dioxide and a polymer obtained by polymerizing a monomer composition containing a carbonyl group-containing monomer.

Examples of the carbonyl group-containing monomer include a C3-C8 radically polymerizable unsaturated carboxylic acid monomer, a C3-C8 radically polymerizable unsaturated carboxylate monomer, and a polyfunctional carboxylate monomer.

Examples of the C3-C8 radically polymerizable unsaturated carboxylic acid monomer include those having one free carboxy group per molecule for ionic crosslinking.

Specific examples of such monomers include unsaturated carboxylic acids and anhydrides thereof. These may be used alone or in combination of two or more thereof.

Examples of unsaturated carboxylic acids include unsaturated monocarboxylic acids such as acrylic acid, methacrylic acid, ethacrylic acid, crotonic acid, and cinnamic acid, and unsaturated dicarboxylic acids such as maleic acid, itaconic acid, fumaric acid, citraconic acid, and chloromaleic acid.

Particularly preferred among them are acrylic acid, methacrylic acid, maleic acid, maleic anhydride, and itaconic acid.

The lower limit of the amount of the C3-C8 radically polymerizable unsaturated carboxylic acid monomer in the monomer composition is preferably 5% by weight and the upper limit thereof is preferably 50% by weight. When the amount is 5% by weight or more, the maximum foaming temperature can be increased. When the amount is 50% by weight or less, the expansion ratio can be improved. The lower limit is preferably 10% by weight and the upper limit is preferably 30% by weight.

The C3-C8 radically polymerizable unsaturated carboxylate monomer is preferably, for example, (meth)acrylate, particularly preferably alkyl methacrylate such as methyl methacrylate, ethyl methacrylate, or n-butyl methacrylate. Also preferred are alicyclic methacrylates, aromatic ring-containing methacrylates, and heterocyclic ring-containing methacrylates, such as cyclohexyl methacrylate, benzyl methacrylate, and isobornyl methacrylate.

The lower limit of the amount of the C3-C8 radically polymerizable unsaturated carboxylate monomer in the monomer composition is preferably 10% by weight and the upper limit thereof is preferably 35% by weight. When the amount of the C3-C8 radically polymerizable unsaturated carboxylate monomer is 10% by weight or more, the dispersibility of a composition containing the thermally expandable microcapsule can be improved. When the amount is 35% by weight or less, the gas barrier properties of the cell wall can be improved, so that thermal expandability can be improved. The lower limit of the amount of the C3-C8 radically polymerizable unsaturated carboxylate monomer is more preferably 15% by weight and the upper limit thereof is more preferably 30% by weight.

The polyfunctional carboxylate monomer refers to a carboxylate monomer containing two or more radically polymerizable double bonds, and is different from the C3-C8 radically polymerizable unsaturated carboxylate monomer.

The polyfunctional carboxylate monomer functions as a cross-linking agent. The polyfunctional carboxylate monomer contained can enhance the strength of the shell, so that the cell wall can be less likely to break during thermal expansion.

Specific examples of the polyfunctional carboxylate monomer include di(meth)acrylates and tri- or higher functional (meth)acrylates.

Examples of di(meth)acrylates include ethylene glycol di(meth)acrylate, diethylene glycol di(meth)acrylate, triethylene glycol di(meth)acrylate, propylene glycol di(meth)acrylate, and 1,4-butanediol di(meth)acrylate. Examples also include 1,6-hexanediol di(meth)acrylate, 1,9-nonanediol di(meth)acrylate, glycerol di(meth)acrylate, trimethylol propane di(meth)acrylate, and dimethylol-tricyclodecane di(meth)acrylate. Di(meth)acrylate of polyethylene glycol having a weight average molecular weight of 200 to 600 may also be used.

Examples of trifunctional (meth)acrylates include trimethylolpropane tri(meth)acrylate, ethylene oxide-modified trimethylolpropane tri(meth)acrylate, pentaerythritol tri(meth)acrylate, and triallylformal tri(meth)acrylate. Examples of tetra- or higher functional (meth)acrylates include pentaerythritol tetra(meth)acrylate and dipentaerythritol hexa(meth)acrylate.

Of these, trifunctional (meth)acrylates such as trimethylolpropane tri(meth)acrylate and bifunctional (meth)acrylates such as polyethylene glycol provide relatively uniform crosslinking in a shell mainly containing acrylonitrile.

The lower limit of the amount of the polyfunctional carboxylate monomer in the monomer composition is preferably 0.1% by weight and the upper limit thereof is preferably 1.0% by weight. When the amount of the polyfunctional carboxylate monomer is 0.1% by weight or more, the polyfunctional carboxylate monomer can sufficiently exhibit effects as a cross-linking agent. When the amount of the polyfunctional carboxylate monomer is 1.0% by weight or less, the expansion ratio of the thermally expandable microcapsule can be improved. The lower limit of the amount of the polyfunctional carboxylate monomer is more preferably 0.15% by weight and the upper limit thereof is more preferably 0.9% by weight.

The monomer composition preferably contains a nitrile monomer such as acrylonitrile or methacrylonitrile in addition to the carbonyl group-containing monomer.

Adding the nitrile monomer can improve the gas barrier properties of the shell.

The monomer composition may also contain vinylidene chloride, divinylbenzene, vinyl acetate, a styrene monomer, and/or the like in addition to the carbonyl group-containing monomer and the nitrile monomer.

The lower limit of the amount of the nitrile monomer in the monomer composition is preferably 40% by weight and the upper limit thereof is preferably 90% by weight. When the amount is 40% by weight or more, the gas barrier properties of the shell can be increased and thus the expansion ratio can be improved. When the amount is 90% by weight or less, heat resistance can be improved, and yellowing can be prevented. The lower limit is more preferably 50% by weight and the upper limit is more preferably 80% by weight.

In particular, from the viewpoint of heat resistance, expansion ratio, lightness, hardness, and abrasion resistance, the monomer composition preferably contains the nitrile monomer in an amount of 40 to 90% by weight and the carbonyl group-containing monomer in an amount of 10 to 60% by weight.

The monomer composition contains a polymerization initiator to polymerize the monomers.

Examples of suitable polymerization initiators include dialkyl peroxide, diacyl peroxide, peroxy ester, peroxydicarbonate, and azo compounds. Examples of suitable polymerization initiator include dialkyl peroxide, diacyl peroxide, peroxy ester, peroxydicarbonate, and azo compounds.

Specific examples include: dialkyl peroxides such as methyl ethyl peroxide, di-t-butyl peroxide, and dicumyl peroxide; and diacyl peroxides such as isobutyl peroxide, benzoyl peroxide, 2,4-dichlorobenzoyl peroxide, and 3,5,5-trimethylhexanoyl peroxide.

Examples also include t-butyl peroxypivalate, t-hexyl peroxypivalate, t-butyl peroxyneodecanoate, t-hexyl peroxyneodecanoate, 1-cyclohexyl-1-methylethyl peroxyneodecanoate, and 1,1,3,3-tetramethylbutyl peroxyneodecanoate.

Examples also include: peroxy esters such as cumyl peroxyneodecanoate and (α,α-bis-neodecanoylperoxy)diisopropylbenzene; bis(4-t-butylcyclohexyl)peroxydicarbonate; di-n-propyl-oxydicarbonate; and diisopropylperoxydicarbonate.

Examples also include peroxydicarbonates such as di(2-ethylethylperoxy)dicarbonate, dimethoxybutyl peroxydicarbonate, and di(3-methyl-3-methoxybutylperoxy)dicarbonate.

Examples also include azo compounds such as 2,2'-azobisisobutyronitrile, 2,2'-azobis(4-methoxy-2,4-dimethylvaleronitrile, 2,2'-azobis(2,4-dimethylvaleronitrile), and 1,1'-azobis(1-cyclohexanecarbonitrile).

The lower limit of the weight average molecular weight of the polymer constituting the shell is preferably 100,000 and the upper limit thereof is preferably 2,000,000. When the weight average molecular weight is less than 100,000, the shell may have decreased strength. When the weight average molecular weight is more than 2,000,000, the shell may have too high strength, which may decrease the expansion ratio.

The shell may further contain a stabilizer, an ultraviolet absorber, an antioxidant, an antistatic agent, a flame retardant, a silane coupling agent, a colorant, and the like, if necessary.

The thermally expandable microcapsule includes a volatile expansion agent as a core agent encapsulated by the shell.

The volatile expansion agent is a substance that becomes gaseous at a temperature not higher than the softening point of the polymer constituting the shell. The volatile expansion agent is preferably a low-boiling-point organic solvent.

Examples of the volatile expansion agent include low molecular weight hydrocarbons such as ethane, ethylene, propane, propene, n-butane, isobutane, butene, isobutene, n-pentane, isopentane, neopentane, n-hexane, heptane, petroleum ether, isooctane, octane, decane, isododecane, dodecane, and hexandecane.

Examples also include: chlorofluorocarbons such as CCl₃F, CCl₂F₂, CClF₃, and CClF₂-CClF₂; tetraalkylsilanes such as tetramethylsilane, trimethylethylsilane, trimethylisopropylsilane, and trimethyl-n-propylsilane. In particular, isobutane, n-butane, n-pentane, isopentane, n-hexane, isooctane, isododecane, and mixtures of these are preferred. These volatile expansion agents may be used alone or in combination of two or more thereof.

The volatile expansion agent may be a heat-decomposable compound that is heat-decomposable into a gaseous form by heat.

For the thermally expandable microcapsule of the present invention, among the above volatile expansion agents, a low-boiling-point hydrocarbon having a carbon number of 5 or less is preferably used. With such a hydrocarbon, the thermally expandable microcapsule can have a high expansion ratio and quickly start foaming.

The volatile expansion agent may be a heat-decomposable compound that is heat-decomposable into a gaseous form by heat.

The method of producing the thermally expandable microcapsule of the present invention is not limited. For example, the thermally expandable microcapsule may be produced through the steps of: preparing an aqueous medium; dispersing, in the aqueous medium, an oily mixture liquid containing the monomer composition and the volatile expansion agent; and polymerizing the monomers.

For example, the monomer composition used may be the above-described composition containing the nitrile monomer in an amount of 40 to 90% by weight and the carbonyl group-containing monomer in an amount of 10 to 60% by weight.

In production of the thermally expandable microcapsule of the present invention, first, the step of preparing an aqueous medium is performed. Specifically, for example, a polymerization reaction container is charged with water, a dispersion stabilizer containing silicon dioxide, and if necessary an auxiliary stabilizer, to prepare an aqueous dispersion medium containing silicon dioxide. If necessary, alkali metal nitrite, stannous chloride, stannic chloride, potassium dichromate, or the like may be added.

Examples of the dispersion stabilizer containing silicon dioxide include colloidal silica.

The colloidal silica may be alkaline colloidal silica which is a colloidal solution (aqueous dispersion) having a pH higher than 7, or may be acidic colloidal silica having a pH lower than 7. In particular, alkaline colloidal silica is more preferred.

The colloidal silica preferably contains silicon dioxide as a solid component in an amount of 10 to 50% by weight and is preferably monodispersed.

Examples of dispersion stabilizers other than the silicon dioxide include calcium phosphate, magnesium hydroxide, aluminum hydroxide, ferric hydroxide, barium sulfate, calcium sulfate, sodium sulfate, calcium oxalate, calcium carbonate, barium carbonate, and magnesium carbonate.

The amount of the dispersion stabilizer containing silicon dioxide added is appropriately determined according to the particle size of the thermally expandable microcapsule. The lower limit of the amount relative to 100 parts by weight of the oily mixture liquid (oil phase) is preferably 2.5 parts by weight and the upper limit thereof is preferably 7 parts by weight. The lower limit is still more preferably 3 parts by weight and the upper limit is still more preferably 5 parts by weight. The amount of the oil phase means the total amount of the monomers and the volatile expansion agent.

Examples of the auxiliary stabilizer include condensation products of diethanolamine and aliphatic dicarboxylic acids and condensation products of urea and formaldehyde. Examples also include polyvinylpyrrolidone, polyethylene oxide, polyethyleneimine, tetramethylammonium hydroxide, gelatin, methylcellulose, polyvinyl alcohol, dioctyl sulfosuccinate, sorbitan esters, and emulsifiers.

Examples of the combination of the dispersion stabilizer and the auxiliary stabilizer include, but not limited to, a combination of colloidal silica and a condensation product and a combination of colloidal silica and a water-soluble nitrogen-containing compound. Preferred among them is a combination of colloidal silica and a condensation product.

The condensation product is preferably a condensation product of diethanolamine and an aliphatic dicarboxylic acid, particularly preferably a condensation product of diethanolamine and adipic acid or a condensation product of diethanolamine and itaconic acid.

Examples of the water-soluble nitrogen-containing compound include polyvinylpyrrolidone, polyethyleneimine, polyoxyethylenealkylamine, and polydialkylaminoalkyl (meth)acrylate typified by polydimethylaminoethyl methacrylate and polydimethylaminoethyl acrylate. Examples also include polydialkylaminoalkyl(meth)acrylamides typified by polydimethylaminopropylacrylamide and polydimethylaminopropylmethacrylamide, polyacrylicamide, polycationic acrylamide, polyamine sulfone, and polyallylamine. Preferred among them is polyvinylpyrrolidone.

The amount of the condensation product or the water-soluble nitrogen-containing compound is appropriately determined according to the particle size of the thermally expandable microcapsule. The lower limit of the amount relative to 100 parts by weight of the oily mixture liquid is preferably 0.05 parts by weight and the upper limit thereof is preferably 0.2 parts by weight.

In addition to the dispersion stabilizer and the auxiliary stabilizer, an inorganic salt such as sodium chloride or sodium sulfate may be added. Addition of an inorganic salt allows the thermally expandable microcapsule to have a more uniform particle shape. The amount of the inorganic salt added is usually preferably 0 to 100 parts by weight relative to 100 parts by weight of the monomers.

The aqueous dispersion medium containing the dispersion stabilizer is prepared by adding the dispersion stabilizer and the auxiliary stabilizer to deionized water. The pH of the aqueous phase is appropriately decided according to the type of the dispersion stabilizer and the auxiliary stabilizer used. For example, when silicon dioxide is used as the dispersion stabilizer, polymerization is performed in an acidic medium. The aqueous medium is made acidic by adjusting the pH of the system to 3 to 4 by adding an acid such as hydrochloric acid as needed. When magnesium hydroxide or calcium phosphate is used, polymerization is performed in an alkaline medium.

In the method of producing the thermally expandable microcapsule, next, the step of dispersing an oily mixture liquid in the aqueous medium is performed. The oily mixture liquid contains the monomer composition and the volatile expansion agent.

Specifically, for example, an oily mixture liquid containing the above-described monomer composition containing the nitrile monomer in an amount of 40 to 90% by weight and the carbonyl group-containing monomer in an amount of 10 to 60% by weight and the volatile expansion agent is dispersed in the aqueous medium. In this step, the monomer composition and the volatile expansion agent may be separately added to the aqueous dispersion medium to prepare the oily mixture liquid in the aqueous dispersion medium. Typically, however, they are mixed in advance to form the oily mixture liquid, and the obtained oily mixture liquid is added to the aqueous dispersion medium. In this case, the oily mixture liquid and the aqueous dispersion medium may be prepared in separate containers in advance, mixed in another container with stirring to disperse the oily mixture liquid in the aqueous dispersion medium (primary dispersion), and then added to the polymerization reaction container.

The monomers are polymerized using the polymerization initiator. The polymerization initiator may be added to the oily mixture liquid in advance, or may be added after the aqueous dispersion medium and the oily mixture liquid are mixed with stirring in the polymerization reaction container.

The step of dispersing the oily mixture liquid containing the monomer composition and the volatile expansion agent in the aqueous medium may be performed by a method involving stirring using an impeller such as a retreat impeller, a batch type high-speed rotary high-shear disperser (for example JP H07-96167 A), or a continuous type high-speed rotary high-shear disperser (for example JP 2000-191817 A), or by a method involving passing the oily mixture liquid and the aqueous dispersion through an in-tube disperser such as a line mixer or a static mixer.

In the present invention, in the step of dispersing the oily mixture liquid containing the monomer composition and the volatile expansion agent in the aqueous medium, the oily mixture liquid is particularly preferably dispersed using a static mixer. A static mixer enables mixing in a tube instead of a bath and also enables static mixing without an impeller, thus suitably enabling production of a thermally expandable microcapsule with the peak intensity ratio (peak intensity based on C=O bond/peak intensity based on silicon dioxide) within a predetermined range. At this time, preferably, the oily mixture liquid and the aqueous dispersion medium are prepared in advance in separate containers, mixed to prepare a primary dispersion, and then the primary dispersion is fed to the static mixer under pressure.

The static mixer includes multiple sheet elements, each having many holes, mounted in a tube with both ends open. The sheet elements are placed on top of each other such that in at least one set of adjacent sheet elements, the centers of the holes of the adjacent sheet elements are not aligned with each other but the openings of the holes at least partially face each other.

Through such a step, the thermally expandable microcapsule of the present invention can be suitably produced. The pressure is preferably 1 to 6 MPa.

The number of holes in the elements is preferably adjusted according to the amount of flow.

The pressure can be set by adjusting the hole size and the flow rate. The hole size is preferably 1 to 3 mm. The flow rate is preferably 100 to 500 L/min. Specifically, a combination of a hole size of 2 mm and a flow rate of 200 L/min is suitable, for example.

The thermally expandable microcapsule of the present invention can be produced by performing the step of polymerizing the monomers by heating the dispersion obtained through the above steps, and a cleaning step. The thermally expandable microcapsule produced by such a method has a high maximum foaming temperature and excellent heat resistance, and neither breaks nor shrinks during molding in a high temperature range.

In the method of producing the thermally expandable microcapsule of the present invention, a cleaning step is performed.

The cleaning step may be performed by a method such as immersion cleaning, cleaning with running water, or shower cleaning, or a method combining any of these with ultrasound or oscillation.

The cleaning step may be performed in combination with a dehydrating step to improve production efficiency. Specifically, the following method may be used.

The slurry is fed to a compression dehydrator to form wet cake. A predetermined amount of cleaning water (preferably ion-exchanged water) is then fed to the dehydrator, and the wet cake is compressed again. Cleaning water is then fed and the cake is compressed again. This process is repeated several times. The amounts of slurry and cleaning water fed to the dehydrator, the ratio between the amounts, and the number of cleanings at this time are important for removal of inorganic salts such as sodium chloride or sodium sulfate.

This step can remove inorganic salts, making it possible to prevent corrosion of equipment in semiconductor applications and automobile component applications (molding applications).

A composition for foam molding can be obtained by adding a chemical foaming agent and a matrix resin such as a thermoplastic resin to the thermally expandable microcapsule of the present invention. Alternatively, a masterbatch pellet can be obtained by mixing the thermally expandable microcapsule, a chemical foaming agent, and a base resin such as a thermoplastic resin.

A foam molded article can be produced by adding a matrix resin such as a thermoplastic resin to the masterbatch pellet to prepare a composition for foam molding, molding the composition by a molding method such as injection molding, and then foaming the thermally expandable microcapsule by heating in the molding.

The composition for foam molding of the present invention preferably contains, relative to 100 parts by weight of the matrix resin, 0.1 to 3.0 parts by weight of the thermally expandable microcapsule and 0.5 to 4.0 parts by weight of the chemical foaming agent.

The chemical foaming agent may be any chemical agent that is powdery at room temperature, and may be a conventional one commonly used as a chemical foaming agent.

Chemical foaming agents are classified into organic foaming agents and inorganic foaming agents, which are both further classified into heat-decomposable foaming agents and reactive foaming agents.

Examples of organic heat-decomposable foaming agents that are often used include azodicarbonamide (ADCA), N,N'-dinitropentamethylenetetramine (DNP), and 4,4'-oxybisbenzenesulfonylhydrazide (OBSH).

Examples of inorganic heat-decomposable foaming agents include hydrogencarbonates, carbonates, and combinations of hydrogencarbonates and organic acid salts. The chemical foaming agent is preferably a heat-decomposable chemical foaming agent. The performance of a heat-decomposable chemical foaming agent depends on the decomposition temperature, the amount of gas generated therefrom, and the particle size.

The decomposition temperature of the chemical foaming agent is preferably 180°C to 200°C.

The decomposition temperature can be adjusted by using a urea or zinc foaming aid in combination with the chemical foaming agent as necessary.

The amount of gas generated from the chemical foaming agent is preferably 220 to 240 ml/g. The amount of gas generated is the volume of gas generated when the chemical foaming agent decomposes. This gas, which fills the cells, affects the expansion ratio.

Using the chemical foaming agent in combination with a citric acid salt or zinc oxide can decrease the cell size.

The chemical foaming agent is usually powder. The smaller the particle size of the powder, the larger the number of particles per unit weight. The larger the number of particles, the larger the number of generated cells tends to be.

The lower limit of the average particle (median size) size of the chemical foaming agent is preferably 4 µm and the upper limit thereof is preferably 20 µm. The foaming agent having an average particle size within the above range enables the resulting molded article to have appropriate cells, a sufficient expansion ratio, and excellent appearance. The lower limit is more preferably 5 µm and the upper limit is more preferably 10 µm.

The composition for foam molding of the present invention preferably has a ratio of the average particle size of the thermally expandable microcapsule to the average particle size of the chemical foaming agent (average particle size of thermally expandable microcapsule/average particle size of chemical foaming agent) of 1.0 to 7.5. When the chemical foaming agent has a smaller particle size than the thermally expandable microcapsule, the thermally expandable microcapsule more easily serves as a nucleating agent for the cell growth originated from the chemical foaming agent.

The method for producing the foam molded article is not limited. Examples thereof include knead molding, calender molding, extrusion molding, and injection molding. The injection molding may be performed by any method. Examples of the method include a short shot method, in which part of a resin material is placed in a mold and foamed, and a core back method, in which a mold is fully filled with a resin material and then opened enough to achieve a desired foam size.

### - Advantageous Effects of Invention

The present invention can provide a thermally expandable microcapsule having excellent heat resistance and expansion ratio and enabling production of a light, high-hardness molded article having excellent physical properties (abrasion resistance), and a composition for foam molding containing the thermally expandable microcapsule. The thermally expandable microcapsule of the present invention can be suitably used in automobile components, coating materials, adhesives, and inks.

### DESCRIPTION OF EMBODIMENTS

Embodiments of the present invention are more specifically described in the following with reference to, but not limited to, examples.

### (Example 1)

### (Production of thermally expandable microcapsules)

An amount of 333.7 parts by weight (average particle size 20 nm) of colloidal silica having a solid content of 20% by weight, 6 parts by weight of polyvinylpyrrolidone, 1,094 parts by weight of sodium chloride, and 1.0 parts by weight of sodium nitrite were mixed with 3,100 parts by weight of ion-exchanged water, whereby an aqueous dispersion medium was prepared. The colloidal silica (aqueous dispersion) used was alkaline colloidal silica.

An amount of 722.2 parts by weight (43.33% by weight) of acrylonitrile, 157.6 parts by weight (9.46% by weight) of methacrylonitrile, 415 parts by weight (24.90% by weight) of methacrylic acid, 365.2 parts by weight (21.912% by weight) of methyl methacrylate, and 6.64 parts by weight (0.398% by weight) of trimethylolpropane trimethacrylate were mixed to prepare a monomer composition (the values in the parentheses indicate percentages by weight relative to the entire monomer composition) as a homogenous solution. To this composition were added 10 parts by weight of 2,2'-azobis(isobutyronitrile), 2.5 parts by weight of 2,2'-azobis(2,4-dimethylvaleronitrile), and 400 parts by weight of n-pentane. They were then charged into a tank 1 and mixed.

Subsequently, the aqueous dispersion medium was charged into a tank 2, to which the oily mixture in the tank 1 was added, followed by mixing. Thus, a primary dispersion was obtained. The primary dispersion had a pH of 3.5 to 4.0. The obtained primary dispersion was passed through a static mixer (produced by Fujikin Incorporated, Bunsankun) at a flow rate of 200 L/min and a pressure of 1.5 MPa. The liquid after passing was charged into an autoclave.

The element-type static disperser used had a shape tapered in the middle and included sheet elements each having a thickness of 5 mm, an effective diameter of 15 mm, and a hole size of 2 mm. The number of holes at least partially facing each other in adjacent sheet elements of different types was 78. The number of units each composed of a first element and a second element was 10. The units were set such that the primary dispersion as a fluid passed through the holes of each sheet element.

After nitrogen purging, reaction was performed at a reaction temperature of 60°C for 15 hours. The reaction pressure was 0.5 MPa, and the stirring was performed at 200 rpm.

Thereafter, 8,000 L of the obtained polymerized slurry was fed in portions to a compression dehydrator (produced by Ishigaki Company, Ltd., Filter Press). After dehydration, a predetermined cleaning water was fed to the dehydrator to perform a cleaning step, followed by drying. Thus, thermally expandable microcapsules were obtained.

### (Examples 2 to 6 and Comparative Examples 1 to 7)

Acrylonitrile, methacrylonitrile, methacrylic acid, methyl methacrylate, trimethylolpropane trimethacrylate, isopentane, n-pentane, isooctane, and colloidal silica were mixed according to the formulation shown in Table 1 to prepare a monomer composition. Thermally expandable microcapsules were then obtained as in Example 1 except that emulsification was performed under the conditions shown in Table 1. Here, hydrochloric acid was added to the aqueous dispersion medium to adjust the pH to 3.5 to 4.0 in Comparative Example 1, in which the amount of methacrylic acid added was 0.1% by weight, and in Examples 4 and 6 and Comparative Example 2, in which the amount of methacrylic acid added was small.

The conventional stirring device used was a batch type high-speed rotary high-shear disperser (produced by M Technique Co., Ltd., CLEARMIX CLM-150S, rotor R2).

### (Examples 7 to 12 and Comparative Examples 8 to 16)

### (Production of foam molded article)

Materials were mixed at the formulation shown in Table 2 in a Henschel mixer (dry up at 120°C). The obtained compound was molded by core back molding (resin temperature 200°C, die temperature 40°C, core back amount 3.0 mm) in an injection molding machine (produced by The Japan Steel Works, Ltd., 350 t), whereby a foam molded article was obtained.

Bis(2-ethylhexyl)phthalate (DOP, produced by Mitsubishi Chemical Corporation) was used as a plasticizer. Heavy calcium carbonate (WHITON 305, produced by Shiraishi Kogyo Kaisha, Ltd.) was used as filler. A tin stabilizer (ONZ142AF, produced by Sankyo Organic Chem Co., Ltd.) was used as a thermal stabilizer. Polyethylene wax (AC316A, produced by Honeywell International Inc.) was used as a processing aid.

### (1) Evaluation of thermally expandable microcapsules

### (1-1) Volume average particle size and CV value

The volume average particle size and CV value were measured with a particle size distribution analyzer (LA-950, produced by HORIBA, Ltd.).

### (1-2) Foaming starting temperature, maximum foaming temperature, and maximum displacement

The foaming starting temperature (Ts), maximum displacement (Dmax), and maximum foaming temperature (Tmax) were measured with a thermomechanical analyzer (TMA) (TMA2940, produced by TA Instruments). Specifically, 25 µg of a sample was placed in an aluminum container having a diameter of 7 mm and a depth of 1 mm, and heated at a temperature increase rate of 5°C/min from 80°C to 220°C with a force of 0.1 N applied from the top. The displacement was measured in the perpendicular direction of a measuring terminal. The temperature at which the displacement began to increase was defined as the foaming starting temperature. The maximum value of the displacement was defined as the maximum displacement. The temperature at which the maximum displacement was obtained was defined as the maximum foaming temperature.

### (1-3) IR spectral analysis

For the thermally expandable microcapsules obtained in each of the examples and the comparative examples, multiple (two or more) thermally expandable microcapsules were collected with the core agent encapsulated therein.

IR spectral analysis was performed using a FTIR spectrophotometer (produced by Thermo Scientific, Nicolet iS50). From the result of the (transmission) IR spectral analysis, the peak intensity based on a C=O bond (around 1,700 to 1,730 cm⁻¹) in the shell and the peak intensity based on silicon dioxide (around 1,100 to 1,120 cm⁻¹) in the shell were determined, and the ratio (peak intensity based on C=O bond/peak intensity based on silicon dioxide) was calculated. The measurement values were average values.

### (1-4) Hopper fluidity

A container for measuring bulk specific gravity specified in JIS K7370 was used. The obtained thermally expandable microcapsules were fed to the upper part of a hopper, and then allowed to fall by their own weight. The number of seconds at which the hopper was emptied (all the thermally expandable microcapsules fell down) was measured.

### (2) Evaluation of foam molded article

### (2-1) Density

The density of the obtained foam molded article was measured by a method in accordance with JIS K 7112, Method A (water displacement method).

### (2-2) A hardness

The A hardness of the obtained foam molded article was measured by a method in accordance with JIS K 6253.

### (2-3) Abrasion amount

The volume loss per 1,000 revolutions was measured by a method in accordance with the Akron abrasion tester method (JIS K 6264) at a load of 26.5 N.

**[Table 1 - Part 1]**

| | | Example 1 | Example 2 | Example 3 | Example 4 | Example 5 | Example 6 |
|---|---|---|---|---|---|---|---|
| Composition (parts by weight) | Acrylonitrile | 43.33 | 43.33 | 43.33 | 19.93 | 43.33 | 19.93 |
| | Methacrylonitrile | 9.46 | 9.46 | 9.46 | 29.871 | 9.46 | 29.871 |
| | Methacrylic acid | 24.90 | 24.90 | 24.90 | 19.93 | 24.90 | 19.93 |
| | Methyl methacrylate | 21.912 | 21.912 | 21.912 | 29.871 | 21.912 | 29.871 |
| | Trimethylolpropane trimethacrylate | 0.398 | 0.398 | 0.398 | 0.398 | 0.398 | 0.398 |
| | Isopentane | - | - | 24 | 19.2 | - | 19.2 |
| | n-Pentane | 24 | 24 | - | - | 24 | - |
| | Isooctane | - | - | - | 4.8 | - | 4.8 |
| | Colloidal silica (amount relative to 100 parts by weight of oil phase) | 3.23 | 3.23 | 4 | 3.23 | 3.23 | 3.23 |
| Stirring method | Static mixer | ○ | ○ | ○ | ○ | ○ | ○ |
| | Conventional stirring device | - | - | - | - | - | - |
| Pressure in emulsification (MPa) | | 1.5 | 3.0 | 3 | 1.5 | 1.0 | 1.0 |
| Flow rate in emulsification (L/min) | | 200 | 200 | 200 | 200 | 200 | 200 |
| Evaluation | Volume average particle size (µm) | 30 | 25 | 23 | 28 | 33.3 | 25.2 |
| | CV value (%) | 23 | 20 | 19 | 25 | 35 | 27 |
| | [A] Peak intensity based on C=O bond | 0.188 | 0.188 | 0.196 | 0.132 | 0.187 | 0.132 |
| | [B] Peak intensity based on silicon dioxide | 0.23 | 0.21 | 0.2 | 0.22 | 0.252 | 0.38 |
| | [A]/[B] | 0.817 | 0.895 | 0.980 | 0.600 | 0.742 | 0.347 |
| | Foaming starting temperature (Ts) (°C) | 165 | 166 | 160 | 160 | 148 | 166 |
| | Maximum foaming temperature (Tmax)(° C) | 215 | 220 | 208 | 221 | 188 | 219 |
| | Maximum displacement (Dmax) (µm) | 650 | 550 | 660 | 720 | 513 | 560 |
| | Hopper fluidity (seconds) | 20 | 18 | 17.5 | 23 | 28 | 24 |

**[Table 1 - Part 2]**

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Composition (parts by weight) | Acrylonitrile | 69.722 | 59.762 | 43.33 | 43.33 | 43.33 | 33.33 | 43.33 |
| | Methacrylonitrile | 29.78 | 9.96 | 9.46 | 9.46 | 9.46 | 9.46 | 9.46 |
| | Methacrylic acid | 0.1 | 19.92 | 24.90 | 27.90 | 24.90 | 29.90 | 24.90 |
| | Methyl methacrylate | 0 | 9.96 | 21.912 | 18.912 | 21.912 | 26.912 | 21.912 |
| | Trimethylolpropane trimethacrylate | 0.398 | 0.398 | 0.398 | 0.398 | 0.398 | 0.398 | 0.398 |
| | Isopentane | - | - | 24 | - | - | - | - |
| | n-Pentane | 24 | 24 | - | - | 24 | 24 | 24 |
| | Isooctane | - | - | - | 24 | - | - | - |
| | Colloidal silica (amount relative to 100 parts by weight of oil phase) | 3.23 | 2.2 | 2.4 | 3.23 | 10.5 | 3.23 | 3.23 |
| Stirring method | Static mixer | - | - | - | ○ | ○ | ○ | - |
| | Conventional stirring device | ○ | ○ | ○ | - | - | - | ○ |
| Pressure in emulsification (MPa) | | 0 | 0 | 0 | 1.0 | 4 | 1.5 | 0 |
| Flow rate in emulsification (L/min) | | - | - | - | 200 | 400 | 200 | - |
| Evaluation | Volume average particle size (µm) | 30.1 | 41.6 | 38.6 | 30 | 8.6 | 30 | 30 |
| | CV value (%) | 32 | 44 | 40 | 24 | 16 | 23 | 23 |
| | [A] Peak intensity based on C=O bond | 0.025 | 0.132 | 0.188 | 0.188 | 0.188 | 0.25 | 0.176 |
| | [B] Peak intensity based on silicon dioxide | 0.117 | 0.11 | 0.134 | 0.23 | 0.23 | 0.23 | 0.131 |
| | [A]/[B] | 0.214 | 1.200 | 1.403 | 0.817 | 0.817 | 1.087 | 1.344 |
| | Foaming starting temperature (Ts) (°C) | 139 | 160 | 148 | 185 | 166 | 180 | 165 |
| | Maximum foaming temperature (Tmax )(°C) | 173 | 221 | 188 | 232 | 177 | 225 | 215 |
| | Maximum displacement (Dmax) (µ m) | 820 | 720 | 513 | 280 | 175 | 250 | 650 |
| | Hopper fluidity (seconds) | 26 | 46 | 41 | 20 | 49 | 21 | 20 |

**[Table 2 - Part 1]**

| | | | | Example 7 | Example 8 | Example 9 | Example 10 | Example 11 | Example 12 |
|---|---|---|---|---|---|---|---|---|---|
| Formulation | Resin | Type | | PVC | PVC | PVC | PVC | PVC | PVC |
| | | Amount [% by weight] | | 49.0 | 49.0 | 49.0 | 49.0 | 49.0 | 49.0 |
| | Thermally expandable microcapsule | Type | | Example 1 | Example 2 | Example 3 | Example 4 | Example 5 | Example 6 |
| | | Amount [% by weight] | | 0.5 | 0.5 | 0.5 | 0.5 | 1.0 | 1.0 |
| | Chemical foaming agent | Type | | ADCA | ADCA | ADCA | ADCA | ADCA | ADCA |
| | | Amount [% by weight] | | 1.0 | 1.0 | 1.0 | 1.0 | 0.5 | 0.5 |
| | | Average particle size (µm) | | 6 | 8 | 4 | 4 | 8 | 8 |
| | Particle size ratio (microcapsule/chemical foaming agent) | | | 5.00 | 3.125 | 5.75 | 7.00 | 4.16 | 4.16 |
| | Amount of plasticizer [% by weight] | | | 37.00 | 37.00 | 37.00 | 37.00 | 37.00 | 37.00 |
| | Amount of filler [% by weight] | | | 10.00 | 10.00 | 10.00 | 10.00 | 10.00 | 10.00 |
| | Amount of thermal stabilizer [% by weight] | | | 2.00 | 2.00 | 2.00 | 2.00 | 2.00 | 2.00 |
| | Amount of processing aid [% by weight] | | | 0.50 | 0.50 | 0.50 | 0.50 | 0.50 | 0.50 |
| Evaluation | Molded article | | Density (g/cm³) | 0.44 | 0.42 | 0.405 | 0.403 | 0.49 | 0.48 |
| | | | A hardness | 35.50 | 36.80 | 38.10 | 39.50 | 34.50 | 35.00 |
| | | | Abrasion amount (ml) | 120 | 115 | 80 | 80 | 120 | 118 |

**[Table 2 - Part 2]**

| | | | Comparative Example 8 | Comparative Example 9 | Comparative Example 10 | Comparative Example 11 |
|---|---|---|---|---|---|---|
| Formulation | Resin | Type | PVC | PVC | PVC | PVC |
| | | Amount [% by weight] | 49.0 | 49.0 | 49.0 | 49.0 |
| | Thermally expandable microcapsule | Type | Comparative Example 1 | Comparative Example 2 | Comparative Example 3 | Comparative Example 3 |
| | | Amount [% by weight] | 0.5 | 0.5 | 0.5 | 0.5 |
| | Chemical foaming agent | Type | ADCA | ADCA | ADCA | ADCA |
| | | Amount [% by weight] | 1.0 | 1.0 | 1.0 | 1.0 |
| | | Average particle size (µm) | 8 | 8 | 8 | 20 |
| | Particle size ratio (microcapsule/chemical foaming agent) | | 3.76 | 5.20 | 4.83 | 1.93 |
| | Amount of plasticizer [% by weight] | | 37.00 | 37.00 | 37.00 | 37.00 |
| | Amount of filler [% by weight] | | 10.00 | 10.00 | 10.00 | 10.00 |
| | Amount of thermal stabilizer [% by weight] | | 2.00 | 2.00 | 2.00 | 2.00 |
| | Amount of processing aid [% by weight] | | 0.50 | 0.50 | 0.50 | 0.50 |
| Evaluation | Molded article | Density (g/cm³) | 0.473 | 0.478 | 0.469 | 0.485 |
| | | A hardness | 29.5 | 33.40 | 34.40 | 29.00 |
| | | Abrasion amount (ml) | 230 | 200 | 190 | 250 |

**[Table 2 - Part 3]**

| | | | Comparative Example 12 | Comparative Example 13 | Comparative Example 14 | Comparative Example 15 | Comparative Example 16 |
|---|---|---|---|---|---|---|---|
| Formulation | Resin | Type | PVC | PVC | PVC | PVC | PVC |
| | | Amount [% by weight] | 49.0 | 49.0 | 49.0 | 49.0 | 49.0 |
| | Thermally expandable microcapsule | Type | Comparative Example 4 | Comparative Example 5 | Comparative Example 6 | Comparative Example 7 | Comparative Example 2 |
| | | Amount [% by weight] | 0.5 | 0.5 | 0.5 | 0.5 | 0.5 |
| | Chemical foaming agent | Type | ADCA | ADCA | ADCA | ADCA | ADCA |
| | | Amount [% by weight] | 1.0 | 1.0 | 1.0 | 1.0 | 1.0 |
| | | Average particle size (µm) | 6 | 6 | 6 | 6 | 4 |
| | Particle size ratio (microcapsule/chemical foaming agent) | | 5.00 | 5.00 | 5.00 | 5.00 | 10.40 |
| | Amount of plasticizer [% by weight] | | 37.00 | 37.00 | 37.00 | 37.00 | 37.00 |
| | Amount of filler [% by weight] | | 10.00 | 10.00 | 10.00 | 10.00 | 10.00 |
| | Amount of thermal stabilizer [% by weight] | | 2.00 | 2.00 | 2.00 | 2.00 | 2.00 |
| | Amount of processing aid [% by weight] | | 0.50 | 0.50 | 0.50 | 0.50 | 0.50 |
| Evaluation | Molded article | Density (g/cm³) | 0.491 | 0.490 | 0.492 | 0.485 | 0.415 |
| | | A hardness | 28.50 | 27.50 | 28.80 | 30.00 | 28.50 |
| | | Abrasion amount (ml) | 260 | 280 | 280 | 245 | 255 |

### INDUSTRIAL APPLICABILITY

The present invention can provide a thermally expandable microcapsule having excellent heat resistance and high expansion ratio and enabling production of a light, high-hardness molded article having excellent physical properties (abrasion resistance), and a composition for foam molding containing the thermally expandable microcapsule.

## Claims

1. A thermally expandable microcapsule comprising:
a shell containing a polymer; and
a volatile expansion agent as a core agent encapsulated by the shell,
the shell containing silicon dioxide and a polymer obtained by polymerizing a monomer composition containing a carbonyl group-containing monomer,
the thermally expandable microcapsule having a ratio of a peak intensity based on a C=O bond in the shell to a peak intensity based on the silicon dioxide in the shell (peak intensity based on C=O bond/peak intensity based on silicon dioxide) of 0.25 to 1.0 as determined by IR spectral analysis,
the thermally expandable microcapsule having a maximum foaming temperature (Tmax) of 180°C to 225°C.

2. The thermally expandable microcapsule according to claim 1, which has an average particle size of 10 to 30 µm.

3. A composition for foam molding comprising:
the thermally expandable microcapsule according to claim 1 or 2;
a chemical foaming agent; and
a matrix resin.

4. The composition for foam molding according to claim 3, which contains, relative to 100 parts by weight of the matrix resin, 0.1 to 3.0 parts by weight of the thermally expandable microcapsule and 0.5 to 4.0 parts by weight of the chemical foaming agent.

5. The composition for foam molding according to claim 3 or 4,
wherein a ratio of an average particle size of the thermally expandable microcapsule to an average particle size of the chemical foaming agent (average particle size of thermally expandable microcapsule/average particle size of chemical foaming agent) is 1.0 to 7.5.
